(19) Europäisches Patentamt
European Patent Office
Office européen des brevets

(11) EP 4 379 883 A1

(12) EUROPEAN PATENT APPLICATION

(43) Date of publication:
**05.06.2024 Bulletin 2024/23**

(21) Application number: **23213006.2**

(22) Date of filing: **29.11.2023**

(51) International Patent Classification (IPC):
***H01M 10/052*** *(2010.01)* ***H01M 50/403*** *(2021.01)*
***H01M 50/423*** *(2021.01)* ***H01M 50/446*** *(2021.01)*
***H01M 50/449*** *(2021.01)* ***H01M 50/489*** *(2021.01)*

(52) Cooperative Patent Classification (CPC):
**H01M 50/489; H01M 10/052; H01M 50/403; H01M 50/423; H01M 50/446; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 KR 20220164876**

(71) Applicants:
- **SK Innovation Co., Ltd.**
  **Seoul 03118 (KR)**
- **SK ie technology Co., Ltd.**
  **Jongno-gu**
  **Seoul**
  **03188 (KR)**

(72) Inventors:
- **KWON, Tae Wook**
  **34124 Daejeon (KR)**
- **BAE, Heung Taek**
  **34124 Daejeon (KR)**

(74) Representative: **Prüfer & Partner mbB**
**Patentanwälte · Rechtsanwälte**
**Sohnckestraße 12**
**81479 München (DE)**

# (54) SEPARATOR, METHOD OF MANUFACTURING THE SEPARATOR, AND ELECTROCHEMICAL DEVICE INCLUDING THE SEPARATOR

(57) Provided are a separator, a method of manufacturing the separator, and an electrochemical device including the separator. According to an exemplary embodiment, a separator including: a porous substrate; and an inorganic particle layer including a binder and inorganic particles on at least one surface of the porous substrate may be provided, wherein the binder is a water-soluble binder including a (meth)acrylamide-based monomer polymerization unit and the separator has a value of the following Formula (1) satisfying 0.15 or more:

(1) BDV/t

wherein
'BDV' is a voltage (kV) measured in accordance with ASTM D 3755, when a leakage current value is 5 mA, measured under conditions of raising an applied voltage at 5 kV/10 sec after placing the separator between electrodes of a withstand voltage tester(Hipot Tester), and
't' is an overall average thickness (um) of the separator.

EP 4 379 883 A1

## Description

### TECHNICAL FIELD

The following disclosure relates to a separator, a method of manufacturing the separator, and an electrochemical device including the separator, and according to an exemplary embodiment, relates to a separator which significantly decreases a low-voltage defective rate of a battery, a method of manufacturing the separator, and an electrochemical device including the separator.

### BACKGROUND

Recently, as the demand for eco-friendly energy increases, research on electrochemical devices is in progress in various fields such as electrical vehicles, including electronic devices such as mobile phones and PC. An insulating separator interposed between a positive electrode and a negative electrode is being studied for thinning for the high capacity/high output characteristics of an electrochemical device, but due to the thinning trend of the separator, a low-voltage defective rate of a battery is increased. Even when a low-voltage defect occurs in only one battery of a battery pack of an electric vehicle, which includes dozens of batteries, many normal batteries should be discarded, and thus, it is a very important industrial challenge to lower the low-voltage defective rate of a battery.

The low-voltage defect of a battery refers to a phenomenon showing a voltage drop behavior at or above a normal self-discharge rate, and is presumed to be caused complexly by various causes such as foreign substances in a separator, defects such as pinholes, and in the case of a ceramic coating separator, a composition and a distribution of an inorganic layer, and withstand voltage properties of the separator itself.

Therefore, development of a new separator which may suppress the low-voltage defective rate of a battery as described above while having a small thickness is needed. In addition, development of a new separator which satisfies all of heat resistance, adhesion to an electrode, which are key characteristics required for a conventional separator, while suppressing the low-voltage defective rate of a battery is needed.

[Related Art Documents]

[Patent Documents]

(Patent Document 1) Korean Patent Laid-Open Publication No. 10-2014-0011136 (January 28, 2014)

### SUMMARY

An object of the present disclosure is directed to providing a separator which may significantly decrease a low-voltage defective rate of a battery even with a small thickness, a method of manufacturing the separator, and an electrochemical device including the separator.

Another embodiment of the present disclosure is directed to providing a separator which significantly decreases the low-voltage defective rate of a battery and also has excellent heat resistance and adhesion.

In one general aspect, a separator includes: a porous substrate; and an inorganic particle layer including a binder and inorganic particles on at least one surface of the porous substrate, wherein the binder is a water-soluble binder including a (meth)acrylamide-based monomer polymerization unit, and the separator has a value of the following Formula (1) satisfying 0.15 or more:

(1) BDV/t
wherein

'BDV' is a voltage (kV) measured in accordance with ASTM D 3755, when a leakage current value is 5 mA, measured under conditions of raising an applied voltage at 5 kV/10 sec after placing the separator between electrodes of a withstand voltage tester(Hipot Tester), and
't' is an overall average thickness (μm) of the separator.

According to an exemplary embodiment, in a particle size distribution of inorganic particles, a (D80-D20)/D50 value may be 0.01 to 2.0.

According to an exemplary embodiment, when an average thickness of the porous substrate is ti, a $t_1$/ t value may be 0.65 or more.

In an exemplary embodiment, the inorganic particle layer may have a packing density of 1.45 g/($m^2 \cdot \mu m$) or more.

In an exemplary embodiment, the porous substrate may include a polar functional group on the surface.

In an exemplary embodiment, a heat shrinkage rate in the machine direction (MD) and the transverse direction (TD) may be 2% or less, which was measured after the separator is allowed to stand at 150°C for 60 minutes.

In an exemplary embodiment, the binder may be a copolymer including the (a) (meth)acrylamide-based monomer polymerization unit, a (b) hydroxyl group-containing (meth)acrylate-based monomer polymerization unit, and a (c) polyfunctional (meth)acrylamide-based monomer polymerization unit.

In an exemplary embodiment, the (c) polyfunctional (meth)acrylamide-based monomer polymerization unit in the copolymer may include a structure of the following Chemical Formula 3:

[Chemical Formula 3]

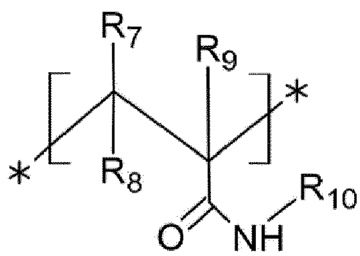

wherein $R_7$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, and $R_{10}$ is a C1 to C10 linear or branched hydrocarbon group including one or more of a hydroxyl group, a carboxyl group, an amine group, an amide group, an ether group, a ketone group, an ester group, and an aldehyde group.

In an exemplary embodiment, the copolymer may include a structure of the following Chemical Formula 4:

[Chemical Formula 4]

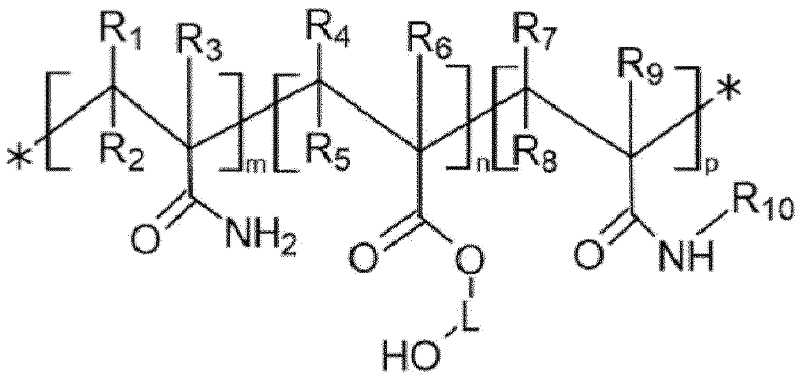

wherein $R_1$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, $R_{10}$ is a C1 to C10 linear or branched hydrocarbon group including one or more of a hydroxyl group, a carboxyl group, an amine group, an amide group, an ether group, a ketone group, an ester group, and an aldehyde group, L is a C1 to C6 substituted or unsubstituted, linear or branched alkylene group, m is 65 to 96, n is 4 to 34, and p is 0.001 to 1.

In an exemplary embodiment, in Chemical Formula 4, p may be 0.01 to 1.

In an exemplary embodiment, the binder may have a weight average molecular weight of 100,000 to 2,000,000 g/mol.

In an exemplary embodiment, the inorganic particle layer may have a thickness of 3 μm or less.

In another general aspect, a method of manufacturing a separator includes: (s1) preparing a slurry including

a water-soluble binder including a (meth)acrylamide-based monomer polymerization unit and inorganic particles; and (s2) forming an inorganic particle layer on at least one surface of a hydrophilically surface-treated porous substrate with the prepared slurry.

According to an exemplary embodiment, in the inorganic particle layer, a (D80-D20)/D50 value may be 0.01 to 2.0.

In an exemplary embodiment, the water-soluble binder may be a copolymer of the (a) (meth) acrylamide-based monomer, a (b) hydroxyl group-containing (meth)acrylate-based monomer, and a (c) polyfunctional (meth)acrylamide-based monomer.

In an exemplary embodiment, the process (s2) may further include applying the prepared slurry on at least one surface of the hydrophilically surface-treated porous substrate, and then allowing it to stand for 5 minutes or more.

In an exemplary embodiment, the hydrophilic surface treatment of the porous substrate may be performed by including one or more of a corona discharge treatment and a plasma discharge treatment.

In still another general aspect, an electrochemical device includes the separator according to the embodiment described above.

Other features and aspects will be apparent from the following detailed description, and the claims.

## DETAILED DESCRIPTION OF EMBODIMENTS

Hereinafter, the present disclosure will be described in more detail by the following exemplary embodiment or the examples. However, the following exemplary embodiments or examples are only a reference for describing the present disclosure in detail, and the present disclosure is not limited thereto and may be implemented in various forms.

In addition, unless otherwise defined, all technical terms and scientific terms have the same meanings as those commonly understood by one of those skilled in the art to which the present disclosure pertains. The terms used herein are only for effectively describing a certain specific example, and are not intended to limit the present disclosure.

In addition, the singular form used in the specification and claims appended thereto may be intended to include a plural form also, unless otherwise indicated in the context.

In addition, unless particularly described to the contrary, "comprising" any elements will be understood to imply further inclusion of other elements rather than the exclusion of any other elements.

In the present specification, "(meth)acryl" refers to acryl and/or methacryl.

In the present specification, "substituted" in the expression "substituted or unsubstituted" means that one or more hydrogen atoms in a hydrocarbon are independently of each other replaced with the same or different substituent. A non-limiting example of the substituent may include deuterium, a halogen group, a hydroxyl group, an amino group, a C1 to C30 amine group, a nitro group, a C1 to C30 silyl group, a C1 to C30 alkyl group, a C1 to C30 alkylsilyl group, a C3 to C30 cycloalkyl group, a C1 to C30 heterocycloalkyl group, a C6 to C30 aryl group, a C1 to C30 heteroaryl group, a C1 to C20 alkoxy group, a C1 to C10 trifluoroalkyl group or a cyano group.

"Dn" (n is a real number) in the present specification refers to a particle diameter of particles which is equivalent to n% in terms of a volume-based integrated fraction. For example, "D80" refers to a particle diameter of particles which is equivalent to 80% in terms of a volume-based integrated fraction. "D20" refers to a particle diameter of inorganic particles which is equivalent to 20% in terms of a volume-based integrated fraction. Dn may be derived from particle size distribution results obtained by collecting a sample of inorganic particles to be measured in accordance with the standard of KS A ISO 13320-1 and performing analysis using Multisizer 4e Coulter counter available from Beckman Coulter. The D50, D80, and D20 specifications in the present disclosure refers to the inorganic particles which have been used to be added to, and included into, the preparation for obtaining the inorganic particle layer.

In the present specification, an "overall average thickness (t) of a separator" refers to an overall average thickness of a separator including a porous substrate and an inorganic particle layer provided on at least one surface of the porous substrate. In an exemplary embodiment, the overall average thickness (t, um) of the separator may be determined by the following method. The separators are overlapped in 10 layers, each thickness is measured at 5 random points in TD by a thickness meter available from Mitutoyo, the values are divided by 5 to derive an average thickness of the 10-layer separator, and are divided by 10 again to derive an overall average thickness of a single separator.

In the present specification, an "average thickness ($t_1$) of a porous substrate" refers to an average thickness of only a porous substrate having no inorganic particle layer provided on at least one surface. In an exemplary embodiment, an average thickness $t_1$ ($\mu$m) of the porous substrate may be determined by the following method. Only porous substrates having no inorganic particle layer provided on at least one surface are overlapped in 10 layers, then the thickness of the 10-layer porous substrate (without a inorganic particle layer on at least one surface thereof) is measured at each of 5 random points in TD with a thickness meter available from Mitutoyo, the values are divided by 5 to derive an average thickness of the 10-layer porous substrate, and are divided by 10 again to derive the average thickness $t_1$ of the porous substrate. In the case in which the average thickness $t_1$ of the porous substrate having the inorganic particle layer

provided on at least one surface is determined, the inorganic particle layer is released using all methods known in the art without limitation and is sufficiently dried, and the average thickness $t_1$ of the porous substrate from which the inorganic particle layer has been released is determined.

In the present specification, a "packing density of inorganic particle layer" refers to a density (g/(m$^2$·μm)) of the inorganic particle layer loaded to a unit area (m$^2$) and a unit height (μm) of the porous substrate. In an exemplary embodiment, a method of measuring the packing density of the inorganic particle layer may be according to the following method. The average thickness $t_1$ of the porous substrate and the overall average thickness t of the separator having the inorganic particle layer provided on the porous substrate are measured according to the method described above, respectively, and the average thickness $t_1$ of the porous substrate is subtracted from the overall average thickness t of the separator to calculate the thickness (T, um) of the inorganic particle layer. The separator having the inorganic particle layer provided on at least one surface of the porous substrate is cut into an area (S, m$^2$) of 10 mm×10 mm (0.01 m$^2$) to measure the weight, and the weight of the porous substrate is subtracted therefrom to calculate the weight (W, g) of only the inorganic particle layer. The packing density of the inorganic particle layer is calculated by W/ (T*S) .

The present disclosure has been devised based on the idea that when the water-soluble binder of the present embodiment is included as the binder of the inorganic particle layer of the separator and the value of the following Formula (1) is controlled to a specific range, a low-voltage defective rate in which voltage is decreased at the voltage of a battery to be desired may be significantly decreased even with a small thickness and also excellent thermal resistance and adhesion may be secured.

According to an exemplary embodiment, a separator which includes a porous substrate; and an inorganic particle layer including a binder and inorganic particles on at least one surface of the porous substrate may be provided, wherein the binder is a water-soluble binder including a (meth)acrylamide-based monomer polymerization unit, and when a value of the following Formula (1) is controlled to a specific range, a low-voltage defective rate of a battery may be significantly decreased even with a small thickness and also heat resistance and adhesion are excellent:

(1) BDV/t

wherein BDV is measured in accordance with ASTM D 3755, and is a voltage (kV) when a leakage current value is 5 mA, which is measured under conditions of placing the separator between electrodes of a withstand voltage tester (e.g. the tester available from Croma, model 19052) under a dry room (dew point temperature: -60°C) and then raising an applied voltage to 5 kV/10 sec. The voltage herein is evaluated as a dielectric breakdown voltage. t is an overall average thickness (μm) of the separator.

In an exemplary embodiment, the value of Formula (1) may be 0.15 or more or 0.153 or more, preferably 0.155 or more, and though the upper limit of the value of Formula (1) is not particularly limited, for example, may be 0.3 or less, 0.25 or less, or 0.2 or less. In a specific embodiment, the value of Formula (1) may be 0.15 to 0.3, 0.153 to 0.25, or 0.155 to 0.2, but is not limited thereto.

The separator according to an exemplary embodiment may significantly decrease a low-voltage defective rate of a battery and also may secure excellent heat resistance and high capacity/high output characteristics at a high temperature, even when a thin inorganic particle layer is provided on at least one surface, preferably both surfaces of the porous substrate. In an exemplary embodiment, when an average thickness of the porous substrate is ti, a $t_1$/t value may be 0.65 or more, 0.67 or more, 0.69 or more and less than 1.0, 0.9 or less, 0.8 or less, or a value between the numerical values. In a specific embodiment, the $t_1$/t value may be 0.65 or more, 0.65 or more and less than 1.0, more specifically 0.67 or more, or 0.67 or more and 0.9 or less.

In an exemplary embodiment, when a hydrophilic surface treatment including one or more of a corona discharge treatment and a plasma discharge treatment is performed on the porous substrate, the packing density of the inorganic particle layer may be further increased, thereby further decreasing the low-voltage defective rate of a battery with a thin separator, but the present disclosure is not limited thereto. In the exemplary embodiment, a polar functional group is provided on the surface of the porous substrate by the corona discharge treatment or the plasma discharge treatment, and the provided polar functional group is bound to the water-soluble binder which fixes the inorganic particle layer chemically or closely by a secondary binding force such as a hydrogen bond, thereby further decreasing the low-voltage defective rate of a battery.

Hereinafter, each constituent of the separator according to exemplary embodiments of the present disclosure will be described.

According to an exemplary embodiment, the porous substrate may use polyolefin such as polyethylene and polypropylene, and may be a film or sheet formed of any one or two or more resins selected from the group consisting of the polyolefins.

The polyolefin-based porous substrate is usually manufactured in a film form and is not limited as long as it is usually used as a separator of an electrochemical device, and an example thereof includes polyethylene, polypropylene, copolymers thereof, but is not necessarily limited thereto.

The thickness of the porous substrate is not particularly limited, but for example, may be 1 um or more, 3 um or more, 5 um or more and 100 pm or less, 50 um or less, 30 um or less, 20 um or less, 15 um or less, 10 um or less, or a value between the numerical values. The thickness of the porous substrate may be, as a non-limiting example, 1 to 100 um, preferably 5 to 50 μm, and more preferably 5 to 30 um. The porous substrate may be, according to an example, a porous polymer substrate manufactured by stretching.

In an exemplary embodiment, the porous substrate may include a polar functional group on the surface. A non-limiting example of the polar functional group may include a carboxyl group, an aldehyde group, a hydroxyl group, but is not particularly limited. The polar functional group may be, according to an example, introduced by a hydrophilic surface treatment, and the hydrophilic surface treatment may be performed by including, according to an example, one or more of a corona discharge treatment and a plasma discharge treatment. The polar functional group provided on the surface of the porous substrate and a water-soluble binder including a (meth)acrylamide-based monomer polymerization unit described later are bound better closely chemically or by a secondary bond such as a hydrogen bond, thereby further improving a low-voltage defective rate of a battery with a thin separator.

In an exemplary embodiment, the inorganic particle layer may include a binder and inorganic particles, and may be a porous inorganic particle layer in which the inorganic particles are connected or fixed by the binder to form pores. In an exemplary embodiment, the inorganic particle layer is provided on at least one surface of the porous substrate, and may occupy an area fraction of 60% or more, 70% or more, 80% or more, or 90% or more based on the entire surface of the porous substrate.

In an exemplary embodiment, the inorganic particle layer may be coated on one or both surfaces of the porous substrate, and when both surfaces of the porous substrate are coated with the inorganic particle layer, the thicknesses of the inorganic particle layers coated on one surface and the other surface may be the same as or different from each other. Though not particularly limited, in an exemplary embodiment, the inorganic particle layer coated on one surface may have a thickness of more than 0 um, 0.3 um or more, 0.5 um or more and 3 μm or less, 2.5 um or less, 2 um or less, or between the numerical values. In a specific embodiment, the inorganic particle layer may have the thickness of more than 0 um and 3 μm or less, preferably more than 0 μm and 2.5 μm or less, and more preferably more than 0 um and 2 μm or less.

In an exemplary embodiment, the inorganic particles are not limited as long as they are inorganic particles used in the art. A non-limiting example of the inorganic particles may include one or two or more of metal hydroxides, metal oxides, metal nitrides, and metal carbides, or one or two or more of $SiO_2$, SiC, MgO, $Y_2O_3$, $Al_2O_3$, $CeO_2$, CaO, ZnO, $SrTiO_3$, $ZrO_2$, $TiO_2$, and AlO(OH) . In view of battery stability the inorganic particles may be preferably metal hydroxide particles such as boehmite.

Though the metal hydroxide is not particularly limited, a non-limiting example thereof may include one or two or more of boehmite, aluminum hydroxide, and magnesium hydroxide. In an exemplary embodiment, when the boehmite is used, for example, it may have a specific surface area (BET) of 10 $m^2$/g or more or 15 $m^2$/g or more, but is not limited thereto.

More preferably, the inorganic particles may be boehmite, and the boehmite may have a specific surface area (BET) of 10 $m^2$/g or more, specifically 15 $m^2$/g or more, but is not limited thereto.

In a specific embodiment, inorganic particles having a specific particle size distribution and a water-soluble binder including (meth)acrylamide-based monomer polymerization unit described later are applied together to an inorganic particle layer, thereby further decreasing a low-voltage defective rate of a battery with a thin separator, but is not limited thereto. According to the exemplary embodiment, in the particle size distribution of the inorganic particles, a (D80-D20)/D50 value may be 0.01 or more, 0.03 or more, 0.05 or more, 0.1 or more, 0.2 or more and 2.0 or less, 1.8 or less, 1.5 or less, 1.3 or less, 1.2 or less, or a value between the numerical values. As a non-limiting example, the (D80-D20)/D50 value may be 0.01 to 2.0, preferably 0.01 to 1.8, or more preferably 0.01 to 1.5. In the specific embodiment, when the inorganic particles satisfy the particle size distribution in the above range, the low-voltage defective rate of a battery may be further decreased.

Though it is not particularly limited as long as the particle size distribution is satisfied, a non-limiting example of the D50 value of the inorganic particles may be 1.0 um or less or 0.7 um or less.

In an exemplary embodiment, the inorganic particle layer may have a packing density of 1.45 g/($m^2$·μm) or more, 1.5 g/ ($m^2$ -pm) or more and 2.5 g/($m^2$·μm) or less, 2.3 g/($m^2$·μm) or less, 2.0 g/($m^2$·μm) or less, or a value between the numerical values, and specifically 1.45 to 2.5 g/($m^2$·μm), 1.5 to 2.3 g/($m^2$·μm), or 1.5 to 2.0 g/($m^2$·μm), but is not limited thereto.

Next, an exemplary embodiment of the binder which connects the inorganic particles to form an inorganic particle layer having pores formed therein will be described. According to an exemplary embodiment of the present disclosure, the binder may be a water-soluble binder including a (meth)acrylamide-based monomer polymerization unit.

In an exemplary embodiment, the water-soluble binder including a (meth)acrylamide-based monomer polymerization unit may be a copolymer including the (a) (meth)acrylamide-based monomer polymerization unit, a (b) hydroxyl group-containing (meth)acrylate-based monomer polymerization unit, and a (c) polyfunctional (meth)acrylamide-based

monomer polymerization unit. In an exemplary embodiment, the copolymer may be a block copolymer or a random copolymer, but is not particularly limited thereto.

According to an exemplary embodiment, when the water-soluble binder is used, a separator which may achieve an effect of decreasing a high-temperature shrinkage rate of the manufactured separator as compared with a conventional water dispersion-based binder, solve a problem that inorganic particles in the inorganic particle layer fall and are separated, and show decreased interface resistance characteristics may be provided. In addition, an electrochemical device manufactured using the separator has decreased electrical resistance and may have improved performance in terms of capacity and output.

In an exemplary embodiment, the (a) (meth)acrylamide-based monomer polymerization unit may include a structure of the following Chemical Formula 1:

[Chemical Formula 1]

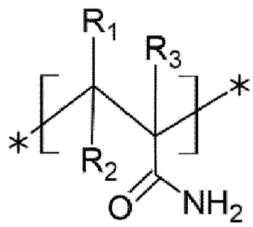

wherein $R_1$ to $R_3$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group.

In an exemplary embodiment, the (b) hydroxyl group-containing (meth)acrylate-based monomer polymerization unit may include a structure of the following Chemical Formula 2:

[Chemical Formula 2]

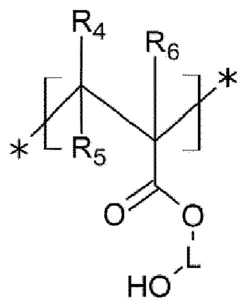

wherein $R_4$ to $R_6$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, and L is a substituted or unsubstituted, linear or branched C1 to C6 alkylene group.

In an exemplary embodiment, the (c) polyfunctional (meth)acrylamide-based monomer polymerization unit may include a structure of the following Chemical Formula 3:

[Chemical Formula 3]

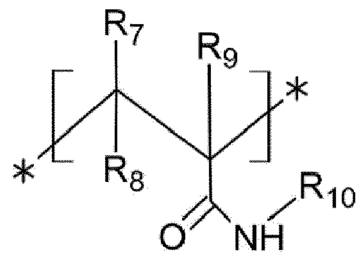

wherein $R_7$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, and $R_{10}$ is a C1 to C10 linear or branched hydrocarbon group including one or more of a hydroxyl group, a carboxyl group, an amine group, an amide group, an ether group, a ketone group, an ester group, and an aldehyde group.

In an exemplary embodiment, the copolymer including the (a) (meth)acrylamide-based monomer polymerization unit, the (b) hydroxyl group-containing (meth)acrylate-based monomer polymerization unit, and the (c) polyfunctional (meth)acrylamide-based monomer polymerization unit may include a structure of the following Chemical Formula 4:

[Chemical Formula 4]

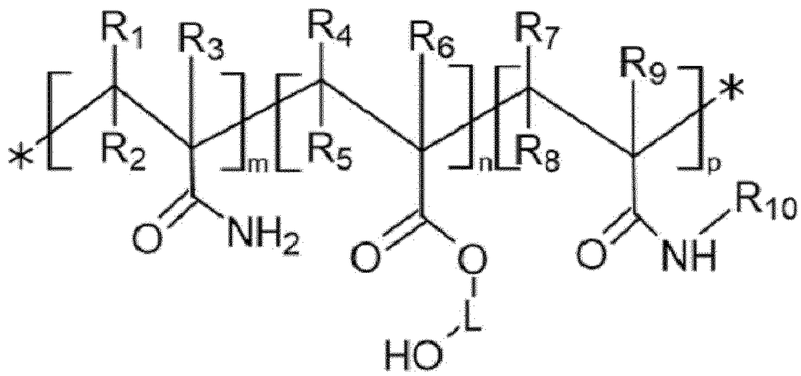

wherein $R_1$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, $R_{10}$ is a C1 to C10 linear or branched hydrocarbon group including one or more of a hydroxyl group, a carboxyl group, an amine group, an amide group, an ether group, a ketone group, an ester group, and an aldehyde group, L is a C1 to C6 substituted or unsubstituted, linear or branched alkylene group, m is 65 to 96, n is 4 to 34, and p is 0.001 to 1. In Chemical Formula 4, m, n, and p refer to contents (mol%) of the (a) (meth)acrylamide-based monomer polymerization unit, the (b) hydroxyl group-containing (meth)acrylate-based monomer polymerization unit, and the (c) polyfunctional (meth)acrylamide-based monomer polymerization unit in the copolymer of Chemical Formula 4 with respect to the total moles.

The binder satisfying the range of the contents of m, n, and p may further decrease the low-voltage defective rate of a battery, may further improve adhesive strength, may further decrease the heat shrinkage rate at a high temperature, and may provide a separator having lower resistance. In an exemplary embodiment, the value of m+n+p which is the sum of the contents of m, n, and p may be 100.

In a specific embodiment, a content m of the (a) (meth)acrylamide-based monomer polymerization unit in the copolymer may be 65 or more, 67 or more, 68 or more, 70.5 or more and 96 or less, 94 or less, 93 or less, 91.5 or less, or a value between the numerical values. More specifically, m may be 65 to 96, 67 to 94, 68 to 93, or 70.5 to 91.5.

In a specific embodiment, a content n of the (b) hydroxyl group-containing (meth)acrylate-based monomer polymerization unit in the copolymer may be 4 or more, 5 or more, 6 or more, 8 or more and 34 or less, 33 or less, 32 or less, 31 or less, 29 or less, or a value between the numerical values. More specifically, n may be 4 to 34, 5 to 33, 6 to 32, 8 to 31, or 8 to 29.

In a specific embodiment, a content p of the (c) polyfunctional (meth)acrylamide-based monomer polymerization unit in the copolymer may be 0.001 or more, 0.002 or more, or 0.003 or more, and in order to further decrease the heat shrinkage rate at a high temperature, may be 0.01 or more or 0.02 or more and 1 or less, 0.9 or less, 0.5 or less, or a value between the numerical values. More specifically, p may be 0.001 to 1, 0.002 to 0.9, or 0.003 to 0.5, and in order to further decrease the heat shrinkage rate at a high temperature, may be 0.01 to 1 or 0.02 to 0.9.

In an exemplary embodiment, the binder may have a weight average molecular weight of 100,000 g/mol or more, 200,000 g/mol or more and 2,000,000 g/mol or less, 1,000,000 g/mol or less, 500,000 g/mol or less, or a value between the numerical values. Specifically, the binder may have a weight average molecular weight of 100,000 to 2,000,000 g/mol, 200,000 to 1,000,000 g/mol, or 200,000 to 500,000 g/mol. According to an exemplary embodiment, when the weight average molecular weight of the binder satisfies the above range, adhesion may be further improved. The weight average molecular weight is an average molecular weight in terms of polyethylene glycol measured using gel permeation chromatography.

A method of preparing the binder is not particularly limited as long as the binder according to the exemplary embodiment described above may be provided, but in an exemplary embodiment, the binder may be provided by various polymerization methods known in the art such as emulsion polymerization, suspension polymerization, mass polymerization, solution polymerization, bulk polymerization, or a combination thereof.

An exemplary embodiment may provide a separator having excellent heat resistance while also significantly decreasing the low-voltage defective rate of a battery. According to an exemplary embodiment, a separator having a heat shrinkage rate in MD and TD of 2% or less, 1.5% or less, or 1.3% or less, and in a specific embodiment, 1.0% or less, 0.8% or less, or 0.7% or less may be provided, the heat shrinkage rate being measured after allowing the separator to stand at 150°C for 60 minutes.

In a more specific embodiment, a new separator satisfying all of the physical properties of the exemplary embodiments described above may be provided.

Next, an exemplary embodiment of a method of manufacturing the separator will be described.

According to an exemplary embodiment, a method of manufacturing a separator including: (s1) preparing a slurry including a water-soluble binder including a (meth)acrylamide-based monomer polymerization unit and inorganic particles; and (s2) forming an inorganic particle layer on at least one surface of a hydrophilically surface-treated porous substrate with the prepared slurry may be provided.

Hereinafter, each process of the method of manufacturing a separator according to the exemplary embodiment will be described. Since the descriptions of the porous substrate, the inorganic particle layer, the inorganic particles, and the binder are as described above, they will be omitted for convenience.

In an exemplary embodiment, the water-soluble binder may be a copolymer of a (a) (meth)acrylamide-based monomer, a (b) hydroxyl group-containing (meth)acrylate-based monomer, and a (c) polyfunctional (meth)acrylamide-based monomer.

The (a) (meth)acrylamide-based monomer is not particularly limited as long as a polymerization unit including the structure of Chemical Formula 1 described above may be provided, but in an exemplary embodiment, the (a) (meth)acrylamide-based monomer may include one or more of acrylamide and methacrylamide, and in a specific embodiment, may include acrylamide.

The (b) hydroxyl group-containing (meth)acrylate-based monomer is not particularly limited as long as the polymerization unit of Chemical Formula 2 described above may be provided, but in an exemplary embodiment, the (b) hydroxyl group-containing (meth)acrylate-based monomer may include one or more of hydroxyalkyl (meth)acrylates including 2-hydroxymethyl acrylate, 2-hydroxyethyl acrylate, 2-hydroxyethyl methacrylate, 2-hydroxypropyl (meth)acrylate, and 4-hydroxybutyl (meth)acrylate, and as a specific embodiment, may include 2-hydroxyethyl acrylate.

The (c) polyfunctional (meth)acrylamide-based monomer is not particularly limited as long as the polymerization unit including the structure of Chemical Formula 3 described above may be provided, but in an exemplary embodiment, the (c) polyfunctional (meth)acrylamide-based monomer may include one or more of N-[tris(hydroxymethyl)methyl]methacrylamide, N-[tris(hydroxymethyl)methyl] acrylamide, N-(4-hydroxy-3,3-bis(hydroxymethyl)butylmethacrylamide, N-(4-hydroxy-3,3-bis(hydroxymethyl)butyl acrylamide, N,N'-methylenebisacrylamide, N,N'-hexamethylenebisacrylamide, and N,N'-(1,2-dihydaroxyethylene)bisacrylamide, and as a specific embodiment, N,N'-methylenebisacrylamide.

In a specific embodiment, the water-soluble binder may be obtained by copolymerizing a mixture including a monomer component including the (a) (meth)acrylamide-based monomer, the (b) hydroxyl group-containing (meth)acrylate-based monomer, and the (c) polyfunctional (meth)acrylamide-based monomer; and a polymerization initiator.

In an exemplary embodiment, the type of polymerization initiator is not particularly limited as long as the copolymer may be obtained, but in an exemplary embodiment, the polymerization initiator may be a persulfuric acid-based polymerization initiator such as potassium persulfate, sodium persulfate, and ammonium persulfate.

According to an exemplary embodiment, the water-soluble binder obtained by copolymerizing the mixture may have a weight average molecular weight of 100,000 g/mol or more, 200,000 g/mol or more, 250,000 g/mol or more and 2,000,000 g/mol or less, or a value between the numerical values. Specifically, the binder may have a weight average

molecular weight of 100,000 to 2,000,000 g/mol, 200,000 to 2,000,000 g/mol, or 250,000 to 2,000,000 g/mol. According to an exemplary embodiment, when the weight average molecular weight of the binder satisfies the above range, adhesion may be further improved. The weight average molecular weight is an average molecular weight in terms of polyethylene glycol measured using gel permeation chromatography.

Without being limited, in an exemplary embodiment, the water-soluble binder may be provided by various polymerization methods known in the art such as emulsion polymerization, suspension polymerization, mass polymerization, solution polymerization, bulk polymerization, or a combination thereof.

According to an exemplary embodiment, the water-soluble binder may be obtained by adding a monomer component including the (a) (meth)acrylamide-based monomer, the (b) hydroxyl group-containing (meth)acrylate-based monomer, and the (c) polyfunctional (meth)acrylamide-based monomer to distilled water, heating to 50 to 90°C or 60 to 80°C, and then adding a polymerization initiator to perform polymerization.

In an exemplary embodiment, after the polymerization reaction is completed, the temperature is lowered to room temperature (20±5°C) and a basic solution are added to prepare a water-soluble binder aqueous solution adjusted to a neutral state. In an exemplary embodiment, the water-soluble binder aqueous solution may have a viscosity of 3000 cps or less, 2500 cps or less, or 2000 cps or less, specifically 1500 cps or less, but is not limited thereto. When the binder is mixed with inorganic particles later in the viscosity range to prepare a slurry, the viscosity of the slurry may be further lowered and applicability may be further improved.

As a method of preparing the slurry, all common methods known in the art may be applied without limitation, and though it is not particularly limited, according to a non-limiting example, the slurry may be prepared by performing stirring at 0 to 60°C for 1 hour to 5 days to disperse inorganic particles having the particle size distribution described above, and agglomerated inorganic particles may be dispersed using a ball mill.

According to an exemplary embodiment, an inorganic particle layer may be provided on at least one surface of a hydrophilically surface-treated porous substrate by the process (s2). As a method of applying the slurry, any common method known in the art may be applied without limitation, and according to a non-limiting example, roll coating, spin coating, dip coating, bar coating, die coating, slit coating, inkjet printing, and a combination of these methods may be applied. Drying for forming the inorganic particle layer is not particularly limited, but may be performed at 100°C or lower or 30 to 60°C.

Unlike a common process of applying a slurry on a porous substrate and then transferring it to a drier immediately within 1 minute to perform drying, according to an exemplary embodiment of the present disclosure, in the process (s2), as a means for further decreasing the low-voltage defective rate of a battery, a process of allowing the substrate to stand at room temperature for 5 minutes or more may be included after applying the slurry. This is a process of allowing it to stand 5 minutes or more, and may impart a time for rearranging the inorganic particles and the water-soluble binder in the slurry and further decrease the low-voltage defective rate of a battery therefrom. It is appropriate that the standing time is imparted over a certain period of time, but when the time is too long, process efficiency may be impaired, which is thus not preferred. Considering the fact, the standing time may be 5 minutes or more, 8 minutes or more, 10 minutes or more, 30 minutes or less, 25 minutes or less, 20 minutes or less, or a value between the numerical values. A specific non-limiting example of the standing time may be 5 to 30 minutes or 5 to 25 minutes.

In an exemplary embodiment, the hydrophilic surface treatment of the porous substrate may be performed by including one or more of a corona discharge treatment and a plasma discharge treatment, and a polar functional group such as a carboxyl group, an aldehyde group, and a hydroxyl group may be introduced by the hydrophilic surface treatment. When the polar functional group is included on the surface of the porous substrate, the water-soluble binder fixing the inorganic particle layer and the polar functional group on the porous substrate interact chemically or by a hydrogen bond or other bonding forces and are bound more closely, thereby further decreasing the low-voltage defective rate of a battery with a thin separator.

In a specific embodiment, after performing drying for forming the inorganic particle layer, a process of aging the porous substrate having the inorganic particle layer formed thereon may be further included. Specifically, the aging may be performed at 50 to 150°C, preferably 65 to 120°C, and an aging time may be 2 hours to 24 hours, preferably 10 to 20 hours. More preferably, the aging may be performed in a temperature range of 70 to 120°C for 10 to 15 hours. The aging is preferred since adhesive strength between the porous substrate and the inorganic particle layer may be increased and heat resistance at a high temperature may be further improved, by the aging.

According to an exemplary embodiment, an electrochemical device including the separator according to an exemplary embodiment of the exemplary embodiments described above may be provided, and the electrochemical device may be any known energy storage device, and though it is not particularly limited, as a non-limiting example, may be a lithium secondary battery. Since the lithium secondary battery is well known and its configuration is also known, it will not be described in detail in the present disclosure.

The lithium secondary battery according to an exemplary embodiment may include the separator described above between a positive electrode and a negative electrode. Herein, the positive electrode and the negative electrode may be used without limitation as long as they are commonly used in the lithium secondary battery.

Hereinafter, the present disclosure will be described in more detail, based on the examples and the comparative examples. However, the following examples and the comparative examples are only an example for describing the present disclosure in more detail, and do not limit the present disclosure in any way.
First, the measurement of physical properties and the evaluation method of the separator will be described.

**[Weight average molecular weight]**

The weight average molecular weight was measured using GPC (Tosoh, EcoSEC HLC-8320 GPC Reflective Index detector). Tskgel guard PWx, two TSKgel GMPWxls, and TSKgel G2500PWxl (7.8×300mm) were used as a GPC column, a 0.1 M $NaNO_3$ aqueous solution was used as a solvent, polyethylene glycol was used as a standard, and analysis was performed at 40°C at a flow rate of 1 ml/min.

**[Average thickness of separator (t, $t_1$)]**

The overall average thickness t (μm) of a separator was determined by the following method. The separators were overlapped in 10 layers, each thickness was measured at 5 random points in TD by a thickness meter available from Mitutoyo, the values were divided by 5 to derive an average thickness of the 10-layer separator, and were divided by 10 again to derive an overall average thickness of a single separator.
The average thickness $t_1$ (um) of a porous substrate was determined by the following method. Only porous substrates having no inorganic particle layer provided on at least one surface were overlapped in 10 layers, each thickness was measured at 5 random points in TD with a thickness meter available from Mitutoyo, the values were divided by 5 to derive an average thickness of the 10-layer porous substrate, and were divided by 10 again to derive the average thickness $t_1$ of the porous substrate. In the case in which the average thickness $t_1$ of the porous substrate having the inorganic particle layer provided on at least one surface was determined, the inorganic particle layer was released using all methods known in the art without limitation and was sufficiently dried, and the average thickness $t_1$ of the porous substrate from which the inorganic particle layer had been released was determined.
The thickness of the inorganic particle layer may be the average thickness of the inorganic particle layer, which may be measured as follows. First the overall average thickness of the separator having the inorganic particle layer on the porous substrate is measured (e.g. in the same manner as the measurement of the thickness of the porous substrate). Then the inorganic particle layer is released using any method known in the art without limitation and is sufficiently dried, and the average thickness of the porous substrate from which the inorganic particle layer has been released is determined. Then the average thickness of the porous substrate is subtracted from the overall average thickness of the separator to calculate the thickness (μm) of the inorganic particle layer.

[Packing density of inorganic particle layer]

The packing density of an inorganic particle layer was measured by the following method.
According to the method described above, the average thickness $t_1$ of the porous substrate and the overall average thickness t of the separator having the inorganic particle layer provided on the porous substrate were measured, respectively, and the average thickness $t_1$ of the porous substrate was subtracted from the overall average thickness t of the separator to calculate the thickness (T, um) of the inorganic particle layer. The separator having the inorganic particle layer provided on the porous substrate was cut into an area (S, $m^2$) of 10 mm×10 mm (0.01 $m^2$) to measure the weight, and the weight of the porous substrate alone was subtracted to calculate the weight (W, g) of the inorganic particle layer alone. The packing density of the inorganic particle layer was calculated by W/(T*S) (g/ ($m^2 \cdot \mu m$)).

**[Viscosity measurement]**

The viscosity was measured referring to ASTM D 2196, and specifically by setting rpm to a torque of 60-70% by a Brookfield viscometer (model RVDV2), spindle of CPA-52Z at 25°C.

**[BDV/t]**

The dielectric breakdown voltage (BDV) was measured in accordance with ASTM D 3755, and was evaluated as a voltage (kV) when a leakage current value was 5 mA, which was measured under the conditions of placing the separator between electrodes of a withstand voltage tester (Croma, model 19052) under a dry room (dew point temperature: -60°C) and then raising an applied voltage to 5 kV/10 sec.
The overall average thickness t (μm) of the separator was obtained by overlapping the separators in 10 layers, measuring each thickness at 5 random points in TD by a thickness meter available from Mitutoyo, dividing the values

by 5 to derive an average thickness of the 10-layer separator, and dividing the values by 10 again to derive the overall average thickness of a single separator.

Thereafter, for comparison of the secured dielectric breakdown voltage versus thickness, a BDV/t value which is a ratio of the dielectric breakdown voltage BDV measured above to the overall average thickness t of the separator was determined.

**[Low-voltage defective rate]**

After an initial resistance of the manufactured battery was measured, a voltage thereof was measured in a 50% state of charge, a voltage drop was measured after 3 weeks, and when a voltage drop of 20 mV or more occurred, it was evaluated as a low-voltage defect.

The low-voltage defect of each of 20 manufactured secondary batteries was determined by the above method, and then the low-voltage defective rate of the battery was evaluated by the following grade depending on the frequency of low-voltage defect occurrences:

A: low frequency of low-voltage defect occurrences
B: high frequency of low-voltage defect occurrences
C: very high frequency of low-voltage defect occurrences

**[Heat shrinkage rate]**

The heat shrinkage rate of the separator was measured based on ASTM D 1204, by the following method. Grid points were marked at 2 cm intervals on a square having sides of 10cm on a separator. One side of the square was the transverse direction (TD) and the other side of the square was the machine direction (MD). A specimen was placed in the center, 5 sheets of paper were placed each on the top and the bottom of the specimen, and the four sides of the paper were wrapped with tape. The specimen wrapped in paper was allowed to stand in a hot air drying oven at 150°C for 60 minutes. Thereafter, the specimen was taken out and the separator was observed with a camera, thereby calculating the shrinkage rate in the length direction of the following Equation 1 and the shrinkage rate in the width direction of the following Equation 2:

Equation 1

Shrinkage rate in the length direction (%) = (length in the length direction before heating - length in the length direction after heating) × 100 / length in the length direction before heating

Equation 2

Shrinkage rate in the width direction (%) = (length in the width direction before heating - length in the width direction after heating) × 100 / length in the width direction before heating

**[Adhesion]**

A separator was cut into a size of 50 mm wide×50 mm long and placed so that the inorganic particle layer was on top. A piece of black drawing paper (20 mm wide×150 mm long×0.25 mm thick) having a coefficient of dynamic

fraction of 0.15 was placed thereon, a pressing device was used to apply a certain pressure (200 $g/cm^2$), the black drawing paper was forcibly pulled to the side, and a degree of inorganic substance adhered on the surface was confirmed and determined as A/B/C/D/F depending on the adhesion degree, referring to the following grade:

A: no adhesion
B: inorganic substance adhered in a small amount

In C-F, the binder and the inorganic substance were adhered together and the degree was severe toward F.

[Examples]

[Example 1]

Preparation of binder

The inside of a 1.0 L flask was replaced with nitrogen, a monomer component of (a) 932 mmol of acrylamide, (b) 89 mmol of 2-hydroxyethylmethacrylate, and (c) 0.058 mmol of N,N'-methylenebisacrylamide and 700 g of distilled water were added to the flask, and then the flask was heated to 75°C. Thereafter, 0.789 mmol of ammonium persulfate as a polymerization initiator was further added to the flask, the flask was closed, and a polymerization reaction of the mixture proceeded. After proceeding with the polymerization reaction for 12 hours, the closed flask was opened to the air to lower the temperature to room temperature, a 1 M sodium hydroxide solution was added to adjust the pH to 7, thereby preparing a binder aqueous solution. The physical properties of the binder and the binder aqueous solution are shown in the following Table 1.

Preparation of slurry

96.5 wt% of boehmite ($\gamma$-AlO(OH), boehmite)(D20: 0.17 $\mu$m, D50: 0.28 um, D80: 0.55 um, (D80-D20)/D50: 1.36) as the inorganic particles and 3.5 wt% of the binder prepared above, based on the total weight of the solid content, were added to water, and stirring was performed to prepare a slurry having a solid content concentration of 28 wt%.

Pretreatment of porous substrate

Both surfaces of a polyethylene porous film (porosity: 40%, Gurley permeability: 159 sec/100 cc, tensile strength MD 2,430 $kgf/cm^2$, TD 1,877 $kgf/cm^2$) having an average thickness of 9 um as a porous substrate film were corona discharge-treated (power density: 2 W/mm) to introduce a surface polar group, and the corona surface treatment was performed at a speed of 3 to 20 mpm (meter per minute).

Manufacture of separator

The slurry was applied on both surfaces of the pretreated porous substrate, and was allowed to stand for 5 minutes. Thereafter, the substrate was dried to form an inorganic particle layer having an average thickness of 2 $\mu$m, respectively (t = 13 $\mu$m) on both surfaces. The porous substrate having the inorganic particle layer provided thereon was aged at 100°C for 12 hours to manufacture a separator. $t_1/t$ was 0.69. The physical properties of the separator are shown in the following Table 3.

Manufacture of secondary battery:

94 wt% of $LiCoO_2$ as a positive active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The slurry prepared above was coated on an aluminum foil having a thickness of 30 um, dried, and pressed to manufacture a positive electrode having a total thickness of 150 $\mu$m. 95 wt% of artificial graphite as a negative electrode active material, 3 wt% of acryl-based latex having Tg of -52°C as a fusing agent, and 2 wt% of carboxymethyl cellulose (CMC) as a thickener were added to water as a solvent, and stirring was performed to prepare a uniform negative electrode slurry. The slurry prepared above was coated on a copper foil having a thickness of 20 $\mu$m, dried, and pressed to manufacture a negative electrode having a total thickness of 150 um. The positive electrode, the negative electrode, and the separator manufactured above were assembled into a pouch type battery so that the separator was stacked between the positive electrode and the negative electrode, and the assembled battery was heat-fused at 80°C and 1 MPa with a heat press machine so that the positive electrode, the

negative electrode, and the separator were fused to each other. Thereafter, an electrolyte solution in which 1 M lithium hexafluorophosphate ($LiPF_6$) was dissolved was injected into a solution including ethylene carbonate (EC), ethylmethyl carbonate (EMC), and dimethyl carbonate (DMC) at a volume ratio of 30:50:20, and the solution was sealed to manufacture a secondary battery having a capacity of 2 Ah.

[Examples 2 to 4]

Binders were prepared in the same manner as in Example 1, except that the binders were prepared with the compositions of the following Table 1, and slurries were prepared in the same manner as in Example 1, except that boehmite having the particle size distribution of the following Table 2 was used, and were manufactured into separators and secondary batteries. The physical properties of the separators are shown in the following Table 3.

[Comparative Examples 1 to 3]

Binders, slurries, separators, and secondary batteries were manufactured in the same manner as in Example 1, except that the binders were prepared with the compositions of the following Table 1. The physical properties of the separators are shown in the following Table 3.

[Comparative Example 4]

A slurry, a separator, and a secondary battery were manufactured in the same manner as in Example 1, except that boehmite particles having the particle size distribution of the following Table 2 were used. The physical properties of the separators are shown in the following Table 3.

[Comparative Example 5]

A binder, a slurry, a separator, and a secondary battery were manufactured in the same manner as in Example 1, except that a water dispersion-based binder having a latex content of 20 wt% as a commercial acryl-based water dispersion-type binder, not the water-soluble binder, was used. The physical properties of the separators are shown in the following Table 3.

[Table 1]

| | Monomer component | | | Polymerization initiator | Binder aqueous solution viscosity (cps) | Weight average molecular weight (g/mol) |
|---|---|---|---|---|---|---|
| | AM (mmol) | 2-HEMA (mmol) | MBAA (mmol) | Ammonium persulfate (nmol) | | |
| Example 1 | 932 | 89 | 0.058 | 0.789 | 956 | 250,000 |
| Example 2 | 932 | 89 | 0.324 | 0.789 | 1132 | 270,000 |
| Example 3 | 784 | 209 | 0.058 | 0.789 | 1025 | 250,000 |
| Example 4 | 706 | 316 | 0.058 | 0.789 | 1020 | 270,000 |
| Comparative Example 1 | 1055 | 0 | 0 | 0.789 | 1427 | 280,000 |
| Comparative Example 2 | 878 | 204 | 0 | 0.789 | 1137 | 300,000 |
| Comparative Example 3 | 1055 | 0 | 0.195 | 0.789 | 1334 | 300,000 |
| Comparative Example 4 | 932 | 89 | 0.058 | 0.789 | 956 | 250,000 |
| Comparative Example 5 | - | - | - | - | 674 | - |

In Table 1, AM is Acrylamide, 2-HEMA is 2-hydroxyethyl methacrylate, and MBAA is N,N'-methylenebisacrylamide.

[Table 2]

| | Inorganic particle size distribution | | | |
|---|---|---|---|---|
| | D20 | D50 | D80 | (D80-D20)/D50 |
| Example 1 | 0.17 | 0.28 | 0.55 | 1.36 |
| Example 2 | 0.35 | 0.7 | 1.53 | 1.69 |
| Example 3 | 0.35 | 0.55 | 1.01 | 1.20 |
| Example 4 | 0.24 | 0.43 | 0.82 | 1.35 |
| Comparative Example 1 | 0.17 | 0.28 | 0.55 | 1.36 |
| Comparative Example 2 | 0.17 | 0.28 | 0.55 | 1.36 |
| Comparative Example 3 | 0.17 | 0.28 | 0.55 | 1.36 |
| Comparative Example 4 | 0.35 | 0.52 | 1.86 | 2.90 |
| Comparative Example 5 | 0.73 | 1.49 | 2.32 | 1.07 |

**[Evaluation Example]** Physical properties of separator

The results of evaluating the physical properties of the separators of the examples and the comparative examples of the present disclosure are summarized and shown in the following Table 3.

[Table 3]

| | Inorganic particle layer packing density (g/ ($m^2 \cdot \mu m$)) | Separator thickness (t) ($\mu m$) | BDV/t (kV/ $\mu m$) | Low-voltage defective rate | Heat shrinkage rate (%) | | Strawboard adhesive strength |
|---|---|---|---|---|---|---|---|
| | | | | | MD | TD | |
| Example 1 | 1.58 | 12.7 | 0.168 | A | 0.4 | 0.7 | A |
| Example 2 | 1.54 | 13.2 | 0.157 | A | 0.2 | 0.1 | A |
| Example 3 | 1.62 | 13 | 0.162 | A | 0.4 | 0.5 | A |
| Example 4 | 1.57 | 13 | 0.158 | A | 0.3 | 0.5 | A |
| Comparative Example 1 | 1.36 | 13 | 0.142 | B | 6.2 | 4.5 | B |
| Comparative Example 2 | 1.41 | 12.9 | 0.149 | B | 3 | 2.5 | B |
| Comparative Example 3 | 1.39 | 13 | 0.135 | B | 7.5 | 4.5 | A |
| Comparative Example 4 | 1.02 | 13 | 0.122 | B | >50 | >50 | C |
| Comparative Example 5 | 0.99 | 13 | 0.131 | C | 63.8 | 47.2 | A |

Examples 1 to 4 which are exemplary embodiments of the present disclosure had the BDV/t value satisfying 0.15 or more as compared with Comparative Examples 1 to 5, and as a result, it was confirmed that the low-voltage defective rate of the battery was significantly decreased even at a small thickness, heat resistance was excellent with the heat shrinkage rate in MD and TD of 2% or less as measured after allowing the separator to stand at 150°C for 60 minutes, and adhesion was significantly improved with the strawboard adhesive strength of A.

In particular, Example 2 in which the content of MBAA as the polyfunctional (meth)acrylamide-based monomer was 0.01 mol% or more showed best heat resistance with the heat shrinkage rate in MD and TD of 0.2% or less among

the examples.

However, Comparative Examples 1 to 3 had the BDV/t value of 0.15 or less, and as a result, had a high low-voltage defective rate of the battery and poor heat resistance with the heat shrinkage rate in MD and TD of 2% or more.

Comparative Example 4 had the BDV/t value of 0.15 or less, and as a result, had a high low-voltage defective rate of the battery and poor heat resistance and adhesion as compared with the examples.

Comparative Example 5 used a commercial acryl-based water dispersion-type binder and had the BDV/t value of 0.15 or less, and as a result, had very high low-voltage defect of the battery and very poor heat resistance.

According to the present disclosure, a separator which includes the water-soluble binder of the present embodiment as the binder of an inorganic particle layer and has a value of the following Formula (1) satisfying 0.15 or more, 0.153 or more, or 0.155 or more may significantly decrease the low-voltage defective rate of a battery having a decreased voltage at the voltage of a battery to be desired even with a small thickness and also may secure excellent heat resistance and adhesion:

$$(1)\ BDV/t$$

wherein BDV is measured in accordance with ASTM D 3755, and is a voltage (kV) when a leakage current value is 5 mA, which was measured under conditions of placing the separator between electrodes of a withstand voltage tester and then raising an applied voltage to 5 kV/10 sec, and t is an overall average thickness (μm) of the separator.

In an exemplary embodiment, a heat shrinkage rate in MD and TD measured after the separator is allowed to stand at 150°C for 60 minutes may be 2% or less, 1.5% or less, or 1.3% or less, and in a specific embodiment, 1.0% or less, 0.8% or less, or 0.7% or less.

In a specific embodiment, a packing density of the inorganic particle layer may be further increased and the low-voltage defective rate of a battery may be further decreased even with the separator having the same thickness, by applying the water-soluble binder and inorganic particles having a specific particle size distribution together to an inorganic particle layer.

In an exemplary embodiment, the packing density of the inorganic particle layer may be 1.45 g/($m^2$·μm) or more or 1.5 g/($m^2$·μm) or more and 2.5 g/($m^2$·μm) or less, 2.3 g/($m^2$·μm) or less, or 2.0 g/($m^2$·μm) or less, or a value between the numerical values.

In an exemplary embodiment, in the particle size distribution of the inorganic particles, when a (D80-D20)/D50 value may be 0.01 to 2.0, the inorganic particles bind to the water-soluble binder, so that the packing density is further increased and the low-voltage defective rate of a battery may be further decreased.

In an exemplary embodiment, when a hydrophilic surface treatment including one or more of a corona discharge treatment and a plasma discharge treatment is performed on the porous substrate, the packing density of the inorganic particle layer may be further increased, thereby further decreasing the low-voltage defective rate of a battery with a thin separator.

In an exemplary embodiment, a polar functional group is provided on the surface of the porous substrate by the corona discharge treatment or the plasma discharge treatment, and the provided polar functional group is bound to the water-soluble binder which fixes the inorganic particle layer chemically or closely by a secondary binding force such as a hydrogen bond, thereby further decreasing the low-voltage defective rate of a battery.

In addition, in a specific embodiment, after forming the inorganic particle layer, an aging process is performed to further increase adhesion between the porous substrate and the inorganic particle layer and further improving heat resistance.

In a more specific embodiment, a new separator satisfying all of the physical properties may be provided.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

## Claims

**1.** A separator comprising:

a porous substrate; and
an inorganic particle layer including a binder and inorganic particles on at least one surface of the porous substrate,

wherein the binder is a water-soluble binder including a (meth)acrylamide-based monomer polymerization unit, and the separator has a value of the following Formula (1) satisfying 0.15 or more:

$$(1)\ BDV/t$$

wherein
'BDV' is a voltage (kV) measured in accordance with ASTM D 3755, when a leakage current value is 5 mA, measured under conditions of raising an applied voltage at 5 kV/10 sec after placing the separator between electrodes of a withstand voltage tester(Hipot Tester), and
't' is an overall average thickness (μm) of the separator.

**2.** The separator of claim 1, wherein in a particle size distribution of the inorganic particles, a (D80-D20)/D50 value is 0.01 to 2.0.

**3.** The separator of claim 1 or 2, wherein when an average thickness of the porous substrate is $t_1$, a $t_1/t$ value is 0.65 or more.

**4.** The separator of anyone of claims 1 to 3, wherein the inorganic particle layer has a packing density of 1.45 g/ ($m^2 \cdot \mu m$) or more.

**5.** The separator of anyone of the preceding claims, wherein the porous substrate includes a polar functional group on the surface,
preferably wherein the polar functional group is selected from a carboxyl group, an aldehyde group, and/or a hydroxyl group.

**6.** The separator of anyone of the preceding claims, wherein a heat shrinkage rate in machine direction (MD) and transverse direction (TD) is 2% or less, which was measured after the separator is allowed to stand at 150°C for 60 minutes.

**7.** The separator of anyone of the preceding claims, wherein the binder is a copolymer including the (a) (meth)acrylamide-based monomer polymerization unit, a (b) hydroxyl group-containing (meth)acrylate-based monomer polymerization unit, and a (c) polyfunctional (meth)acrylamide-based monomer polymerization unit, preferably wherein the (c) polyfunctional (meth)acrylamidebased monomer polymerization unit in the copolymer includes a structure of the following Chemical Formula 3:

[Chemical Formula 3]

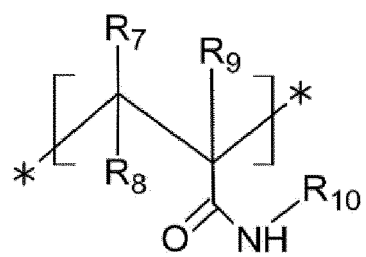

wherein $R_7$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, and $R_{10}$ is a C1 to C10 linear or branched hydrocarbon group including one or more of a hydroxyl group, a carboxyl group, an amine group, an amide group, an ether group, a ketone group, an ester group, and an aldehyde group.

**8.** The separator of claim 7, wherein the copolymer includes a structure of the following Chemical Formula 4:

[Chemical Formula 4]

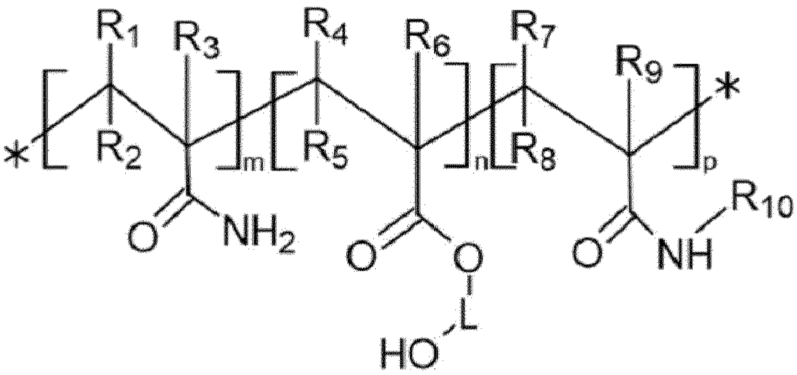

wherein $R_1$ to $R_9$ are independently of one another a functional group including one or more of hydrogen; a substituted or unsubstituted, linear or branched C1 to C6 alkyl group; a substituted or unsubstituted, linear or branched C1 to C6 alkoxy group; a substituted or unsubstituted, linear or branched C2 to C6 alkenyl group; and a substituted or unsubstituted, linear or branched C2 to C6 alkynyl group, $R_{10}$ is a C1 to C10 linear or branched hydrocarbon group including one or more of a hydroxyl group, a carboxyl group, an amine group, an amide group, an ether group, a ketone group, an ester group, and an aldehyde group, L is a C1 to C6 substituted or unsubstituted, linear or branched alkylene group, m is 65 to 96, n is 4 to 34, and p is 0.001 to 1,
preferably wherein in Chemical Formula 4, p is 0.01 to 1.

**9.** The separator of anyone of the preceding claims, wherein the binder has a weight average molecular weight of 100,000 to 2,000,000 g/mol and
wherein the inorganic particle layer has a thickness of 3 μm or less.

**10.** A method of manufacturing a separator, the method comprising:

(s1) preparing a slurry including a water-soluble binder including a (meth)acrylamide-based monomer polymerization unit and inorganic particles; and
(s2) forming an inorganic particle layer on at least one surface of a hydrophilically surface-treated porous substrate with the prepared slurry.

**11.** The method of manufacturing a separator of claim 10, wherein the inorganic particles have a (D80-D20)/D50 value of 0.01 to 2.0.

**12.** The method of manufacturing a separator of claim 10 or 11, wherein the water-soluble binder is a copolymer of a (a) (meth)acrylamide-based monomer, a (b) hydroxyl groupcontaining (meth)acrylate-based monomer, and a (c) polyfunctional (meth)acrylamide-based monomer.

**13.** The method of manufacturing a separator of anyone of claims 10 to 12, wherein the process (s2) further includes: applying the prepared slurry on at least one surface of the hydrophilically surface-treated porous substrate, and then allowing it to stand for 5 minutes or more.

**14.** The method of manufacturing a separator of claim 10, wherein the hydrophilic surface treatment of the porous substrate is performed by including one or more of a corona discharge treatment and a plasma discharge treatment.

**15.** An electrochemical device comprising the separator of any one of claims 1 to 9, optionally wherein the electrochemical device is a secondary battery.

Europäisches Patentamt
European Patent Office
Office européen des brevets

# EUROPEAN SEARCH REPORT

Application Number
EP 23 21 3006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 968 428 A1 (SK INNOVATION CO LTD [KR]; SK IE TECH CO LTD [KR]) 16 March 2022 (2022-03-16) * paragraph [0008] - paragraph [0009] * * paragraph [0048] - paragraph [0051] * * paragraph [0055] - paragraph [0056] * * claim all * ----- | 1-15 | INV. H01M10/052 H01M50/403 H01M50/423 H01M50/446 H01M50/449 H01M50/489 |
| X<br>A | WO 2022/031131 A1 (LG ENERGY SOLUTION LTD [KR]) 10 February 2022 (2022-02-10) * claim all; example 1 * | 1,3-7,9, 10,13-15<br>2,8,11, 12 | |
| X,P<br>A,P | -& EP 4 191 778 A1 (LG ENERGY SOLUTION LTD [KR]) 7 June 2023 (2023-06-07) * claim all; example 1 * ----- | 1,3-7,9, 10,13-15<br>2,8,11, 12 | |
| X<br>A | EP 3 907 781 A1 (SAMSUNG SDI CO LTD [KR]) 10 November 2021 (2021-11-10) * claim all; example all * ----- | 1,3-7,9, 10,13-15<br>2,8,11, 12 | TECHNICAL FIELDS SEARCHED (IPC)<br>H01M |

The present search report has been drawn up for all claims

1

| Place of search | Date of completion of the search | Examiner |
|---|---|---|
| Munich | 22 April 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 3006

This annex lists the patent family members relating to the patent documents cited in the above-mentioned European search report. The members are as contained in the European Patent Office EDP file on
The European Patent Office is in no way liable for these particulars which are merely given for the purpose of information.

22-04-2024

| Patent document cited in search report | Publication date | Patent family member(s) | Publication date |
|---|---|---|---|
| EP 3968428 A1 | 16-03-2022 | CN 114171844 A | 11-03-2022 |
| | | EP 3968428 A1 | 16-03-2022 |
| | | KR 20220033688 A | 17-03-2022 |
| | | US 2022077543 A1 | 10-03-2022 |
| WO 2022031131 A1 | 10-02-2022 | CN 116057771 A | 02-05-2023 |
| | | EP 4191778 A1 | 07-06-2023 |
| | | KR 20220018951 A | 15-02-2022 |
| | | US 2023282937 A1 | 07-09-2023 |
| | | WO 2022031131 A1 | 10-02-2022 |
| EP 4191778 A1 | 07-06-2023 | CN 116057771 A | 02-05-2023 |
| | | EP 4191778 A1 | 07-06-2023 |
| | | KR 20220018951 A | 15-02-2022 |
| | | US 2023282937 A1 | 07-09-2023 |
| | | WO 2022031131 A1 | 10-02-2022 |
| EP 3907781 A1 | 10-11-2021 | CN 113261153 A | 13-08-2021 |
| | | EP 3907781 A1 | 10-11-2021 |
| | | KR 20200085185 A | 14-07-2020 |
| | | US 2022102810 A1 | 31-03-2022 |
| | | WO 2020141684 A1 | 09-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020140011136